# EUROPÄISCHE PATENTSCHRIFT

(11) **EP 3 527 313 B1**
(45) Veröffentlichungstag und Bekanntmachung des Hinweises auf die Patenterteilung: **04.11.2020**
(21) Anmeldenummer: 19000076.0
(22) Anmeldetag: 11.02.2019
(51) Int. Cl.: B23C 5/10

(54) **FRÄSER ZUM SPANABHEBENDEN BEARBEITEN VON WERKSTÜCKEN**
MILLING DEVICE FOR MACHINING WORKPIECES
FRAISE DESTINÉE À L'USINAGE PAR ENLÈVEMENT DE COPEAUX DE PIÈCES À USINER

(30) Priorität: 15.02.2018 DE 202018000764 U
(43) Veröffentlichungstag der Anmeldung: 21.08.2019
(73) Patentinhaber: Hofmann & Vratny OHG, 85617 Assling (DE)
(72) Erfinder: Vratny, Zdenek, 81617 Aßling (DE)
(74) Vertreter: Czybulka, Uwe

(56) Entgegenhaltungen:
- WO-A1-2008/028462
- CH-A- 534 561
- FR-A- 1 226 327
- JP-A- S5 255 067

## Beschreibung

Die Erfindung bezieht sich auf einen Fräser zum spanabhebenden Bearbeiten von Werkstücken, insbesondere zum Schruppen von solchen Werkstücken.

Ein solcher Fräser weist einen zylindrischen Werkzeugschaft auf, der ein oberes Einspannende zum Einspannen des Fräsers in eine Fräsmaschine und einen sich daran anschliessenden Fräsbereich aufweist.

Der Fräsbereich weist z.B. gemäss der DE 20 2007 011 301 U1 eine etwa bandförmige Fräsfläche auf, die im Umfang des Schafts gelegen ist, sich in einem Schraubengang mit einem gegenüber der Mitte-Längsachse des Fräsers angestellten Steigungswinkel erstreckt und an ihrem Rand durch eine Schneidkante begrenzt ist.

An die Schneidkante schliesst sich eine längs des Schraubengangs laufende, im Längsschnitt des Fräsers nach innen gewandte, im Querschnitt etwa C-förmige, kehlförmige Freifläche als Spanabführ-Rille an.

Die bandförmige Fräsfläche ist in ihrer Längsrichtung z.B. mit einem Wellenschliff versehen, sodass der Fräser als Schruppfräser dient. Der Wellenschliff ist z.B. ein kontinuierlicher Wellenschliff nach Art einer Sinuslinie.

Es gab Überlegungen, den Wellenschliff als ansteigende Flanke mit einer Bergspitze und anschliessendem Tal, sozusagen mit einem "Dreiecks-Schliff" auszubilden. JP S52 55067 A offenbart einen Fräser zum spanabhebenden Bearbeiten von Werkstücken bestehend aus einem zylindrischen Werkzeugschaft, der ein oberes Einspannende zum einspannen des Fräsers in eine Fräsmaschine und einen daran anschliessenden Fräsbereich ausweist, mit folgenden Merkmalen:
der Fräsbereich weist zumindest eine etwa bandförmige Fräsfläche auf, die im Umfang des Werkzeugschafts gelegen ist, sich in einem Schraubengang mit einem gegenüber der Mittel-Längsachse des Fräsers angestellten Steigungswinkel erstreckt und an ihrem Rand durch eine Schneidkante begrenzt ist;
an die Schneidkante schliesst sich längs des Schraubengangs eine im Querschnitt nach innen gewandte etwa C-förmige Freifläche als Spanabführ-Rille an;
jede Fläche der Spanabführ-Rille ist im Anschluss an die Schneidkante ebenfalls mit einem Wellenschiff aus periodisch abwechselnden Bergen und Tälern versehen.

FR 1 226 327 A offenbart einen Fräser zum Spanabhebenden Bearbeiten von Werkstücken bestehend aus einem zylindrischen Werkzeugschaft der ein oberes Einspannende zum einspannen des Fräsers in eine Fräsmaschine und einen sich daran anschliessenden Fräsbereich ausweist, mit folgenden Merkmalen:
der Fräsbereich weist zumindest eine etwa bandförmige Fräsfläche auf, die Umfang des Werkzeugsschafts gelegen ist, sich in einem Schraubengang mit einem gegenüber der Mittel-Längsachse des Fräsers angestellten Steigungswinkel erstreckt und an ihrem Rand durch eine Schneidkante begrenzt ist;
an die Schneidkante schliesst sich längs des Schraubengangs eine im Querschnitt nach innen gewandte etwa C-förmige Freifläche als Spanabführ-Rille an;
jede bandförmige Fräsfläche ist in ihrer Längsrichtung mit einem Wellenschiff aus periodisch abwechselnden Bergen und Tälern versehen.

Bei dem Fräser gemäss der erwähnten DE 20 2007 011 301 weist die Schneidkante des Fräsers noch eine Nebenschneide auf, die im Wesentlichen durch ein Entfernen der Spitze der Schneidkante durch einen schrägen Schnitt ausgebildet ist. Mit einer solchen Ausführung können die abgefrästen Späne abgeführt werden, ohne dass der Fräser mechanisch stark belastet wird. Ausserdem brechen die Späne dadurch früher, sodass sie insgesamt kürzer werden und ohne Probleme abgeführt werden.

In der DE 20 2007 015 742 U1 ist ein Fräser beschrieben, bei dem zumindest ein Teil der sich an die Schneidkante anschliessenden Freifläche mit einer Schruppverzahnung versehen ist, die von der Schneidkante ausgeht und sich, in Umfangsrichtung des Fräsers gesehen, über zumindest einen Teil der jeweiligen Spanabführ-Rille in der Freifläche erstreckt.

Hierbei ist vorgesehen, dass diese "innen" liegende Schruppverzahnung ebenfalls als Wellenschliff aus abwechselnd Bergen und Tälern ausgebildet ist.

Ein Vorteil einer solchen innen liegenden Schruppverzahnung, in Form z.B. eines Wellenschliffs ist, dass die Späne des jeweils bearbeiteten Werkstückes sehr kurz sind und zunächst nach unten weg von der Schneide des Fräsers tief in die Spanabführ-Rille abgeführt und dann nach oben in Richtung auf das Einspann-Ende des Fräsers umgelenkt werden. Dadurch werden sogenannte Spanklemmer zuverlässig vermieden.

Es ist vorgeschlagen worden, einen Fräser zu gestalten, der beide Wellenschliffe miteinander kombiniert, d.h. einen direkt in der bandförmigen Fräsfläche gelegenen "äusseren" Wellenschliff und einen sich an die Schneidkante des Fräsers anschliessenden in der Spanabführ-Rille gelegenen "inneren" Wellenschliff.

Bei diesem Vorschlag bei der Herstellung des Fräsers sind die Perioden der beiden Wellenschliffe gleich; ausserdem werden die Wellenschliffe so ausgestaltet, dass Berge und Täler des inneren und äusseren Wellschliffs jeweils gleich liegen.

Es hat sich gezeigt, dass durch diesen "doppelten" Wellenschliff zwar eine Verbesserung der spanabhebenden Wirkung erzielt wird. Wenn Werkstücke mit einer relativ grossen Dicke parallel zur Längsachse des Fräsers gefräst werden, werden die Späne des Werkstückes jedoch relativ lang, sodass sich in den Spanabführ-Rillen manchmal Staus bilden. Der Erfindung liegt die Aufgabe zugrunde, einen Fräser anzugeben, mit dem Späne auch bei relativ dicken Werkstücken mit sehr kurzer Länge erreicht werden, sodass Staus in den Spanabführ-Rillen oder gar Spanklemmer beim Fräsen vermieden werden.

Diese Aufgabe ist gemäss der Erfindung durch die Merkmale des Anspruchs 1 gelöst.

Demnach bezieht sich die Erfindung auf einen Fräser zum Span abhebenden Bearbeiten von Werkstücken mit zumindest einer etwa bandförmigen Fräsfläche, die in einem Schraubengang um den Umfang des Fräsers verläuft, und einer, sich an die Schneidkante dieser Fräsfläche anschliessenden nach innen gewandten kehlfömigen Freifläche als Spanabführ-Rille.

Die bandförmige Fräsfläche ist mit einem "äusseren" Wellenschliff versehen.

Die Spanabführ-Rille ist in dem sich an die Schneidkante bandförmig anschliessenden Bereich mit einem "inneren" Wellenschliff versehen.

Gemäss der Erfindung sind die Perioden der beiden Wellenschliffe so eingestellt, dass Berge und Täler der beiden Wellenschliffe nicht zusammenfallen.

Auf diese Weise werden die abgefrästen Späne eines Werkstückes durch den jeweilig anderen Wellenschliff bei der Bearbeitung verkürzt. Ein Stau in den Spanabführ-Rillen oder Spanklemmer werden vermieden.

Dass Berge und Täler der beiden Wellenschliffe nicht zusammen fallen, kann auf unterschiedliche Weise erreicht werden, z.B. dadurch, dass die Perioden der beiden Wellenschliffe unterschiedlich sind.

Gemäss einer bevorzugten Ausführungsform der Erfindung sind die Perioden des äusseren und des inneren Wellenschliffs annähernd gleich, aber lokal im Umfang des Fräsers gegeneinander versetzt. Durch diesen Versatz trifft ein Berg des ersten Wellenschliffs nicht auf einen Berg des zweiten Wellenschliffs.

Der Versatz der Perioden der Wellenschliffe kann 10-90% der Periodenlänge betragen. Es hat sich herausgestellt, dass je nach dem zu bearbeitenden Material des Werkstücks dieser Versatz unterschiedlich eingestellt werden sollte, um ein optimales Ergebnis zu erlangen.

Für die meisten zu bearbeitenden Materialien beträgt dieser Versatz etwa 50% der Periodenlänge der beiden Wellenschliffe, sodass auf einen Berg des ersten, äusseren Wellenschliffs ein Tal des zweiten, inneren Wellenschliffs trifft.

Bei der Herstellung solcher Fräser gemäss der Erfindung ist bevorzugt der Amplitudenverlauf der beiden Wellenschliffe etwa gleich, wobei auch die Amplituden dieser Wellenschliffe gleich sind. Auch hierbei sind je nach Material des zu bearbeitenden Werkstückes ggf. vorherige Untersuchungen notwendig.

Weitere Ausgestaltungen der Erfindung gehen aus den Unteransprüchen hervor.

Die Erfindung ist in einem Ausführungsbeispiel anhand der Zeichnung näher erläutert.

In der Zeichnung stellen dar:
Figur 1: Eine Ansicht eines Fräsers gemäss der Erfindung mit vier schraubenförmig verlaufenden Fräsflächen, die jeweils eine Schneidkante aufweisen, wobei ein äusserer und ein innerer Wellenschliff vorgesehen sind; und
Figur 2: eine Ansicht des schematischen Verlaufs von äusserem und inneren Wellenschliff.

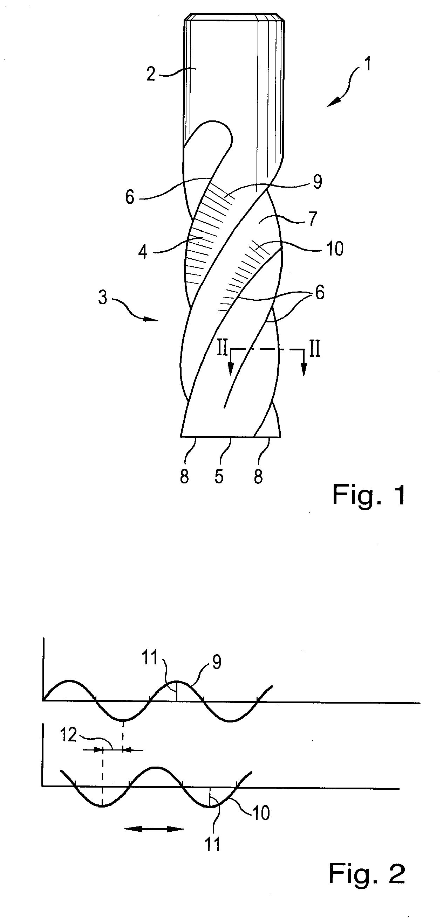

Ein Fräser 1 weist einen zylindrischen Werkzeugschaft 2 auf, der mit seinem, in der Figur 1 oberen Ende in eine hier nicht gezeigte Fräsmaschine eingespannt wird. Der sich an den glatten zylindrischen Werkzeugschaft 2 anschliessende Bereich des Fräsers 1 ist der eigentliche Fräsbereich 3, in diesem Falle mit vier jeweils winkelmässig längs des Umfanges des Fräsers um 90 Grad versetzten Fräsflächen 4, die im Umfang des Fräsers 1 gelegen sind und sich bandförmig von einer dem Einspannende des Werkzeugschafts 2 gegenüber liegenden Stirnseite 5 jeweils in einem Schraubengang in Richtung auf das obere Ende des Fräsbereichs 3 erstrecken. Die Fräsflächen 4 weisen an ihrem Rand jeweils eine Schneidkante 6 auf. Zwischen benachbarten Fräsflächen 4 sind jeweils hohle, im Querschnitt etwa C-förmige Spanabführ-Rillen 7 gelegen, über die das beim Fräsen anfallende Spangut abgeführt wird. Die Fräsflächen 4 enden in der Stirnseite 5 des Fräsers 1 jeweils in einer Schneide 8.

Die in Umfangsrichtung gelegenen Fräsflächen 4 sind mit einem hier nur durch Querstriche angedeuteten Wellenschliff 9 versehen. Dieser Wellenschliff kann vielfältig gestaltet sein, verläuft z. B. gemäss Figur 2 längs einer Sinuskurve. Andere Verläufe sind natürlich möglich.

An die Schneidkante 6 schliesst sich in der Spanabführ-Rille 7 unmittelbar ein weiterer innerer Wellenschliff 10 an. Dieser Wellenschliff 10 kann ebenfalls einen kontinuierlichen Sinusverlauf haben, wie dies in Figur 2 dargestellt ist.

Bei diesem Beispiel sind die Perioden des Sinusverlaufs der beiden Wellenschliffe 9 und 10 gleich; auch die Höhe 11 der Amplituden kann gleich sein.

Entscheidend aber ist, dass die beiden Wellenschliffe 9 und 10 so eingestellt sind, dass in der Regel kein Berg des äusseren Wellenschliffes 9 mit einem Berg des inneren Wellenschliffes 10 zusammenfällt. Im Falle, dass die Perioden der beiden Wellenschliffe gleich sind, wie in Figur 2 gezeigt, haben die Verläufe der Wellenschliffe 9 und 10 jeweils einen Versatz 12. Dieser Versatz wird entsprechend des zu bearbeitenden Werkstückes gewählt und entspricht in der Regel 50% der Halbperiode der Wellenschliffe.

## Patentansprüche

1. Fräser (1) zum spanabhebenden Bearbeiten von Werkstücken, bestehend aus einem zylindrischen Werkzeugschaft (2), der ein oberes Einspannende zum Einspannen des Fräsers in eine Fräsmaschine und einen sich daran anschliessenden Fräsbereich (3) aufweist, wobei der Fräsbereich (3) zumindest eine etwa bandförmige Fräsfläche (4) aufweist, die im Umfang des Werkzeugschafts (2) gelegen ist, sich in einem Schraubengang mit einem gegenüber der Mittellängsachse des Fräsers angestellten Steigungswinkel erstreckt und an ihrem Rand durch eine Schneidkante (6) begrenzt ist;
wobei eine im Querschnitt nach innen gewandte etwa C-förmige kehlförmige Freifläche sich an die Schneidkante (6) längs des Schraubengangs als Spanabführ-Rille (7) anschließt;
wobei jede bandförmige Fräsfläche (4) in ihrer Längsrichtung mit einem ersten Wellenschliff (9) aus periodisch abwechselnden Bergen und Tälern versehen ist
wobei jede Fläche der Spanabführ-Rille (7) im Anschluss an die Schneidkante (6) ebenfalls mit einem zweiten Wellenschliff (10) aus periodisch abwechselnden Bergen und Tälern versehen ist;
**dadurch gekennzeichnet, dass** die Perioden der beiden Wellenschliffe (9,10) so eingestellt sind, dass Berge und Täler der beiden Wellenschliffe in der Regel nicht zusammenfallen.

2. Fräser nach Anspruch 1, **dadurch gekennzeichnet, dass** die Perioden des ersten und des zweiten Wellenschliffs annähernd gleich sind, aber lokal im Umfang des Fräsers gegeneinander um einen Versatz (12) versetzt sind, sodass ein Berg des ersten Wellenschliffs (9) nicht auf einen Berg des zweiten Wellenschliffs (10) trifft.

3. Fräser nach Anspruch 2, **dadurch gekennzeichnet, dass** der Versatz (12) der Perioden der Wellenschliffe (10, 11) 10 bis 90 % der Periodenlänge beträgt.

4. Fräser nach Anspruch 3, **dadurch gekennzeichnet, dass** der Versatz (12) etwa 50 % der Periodenlänge beträgt, sodass auf einen Berg des ersten Wellenschliffs (9) ein Tal des zweiten Wellenschliffs (10) trifft.

5. Fräser nach einem der vorhergehenden Ansprüche, **dadurch gekennzeichnet, dass** der Amplitudenverlauf der beiden Wellenschliffe (9, 10) etwa gleich ist.

6. Fräser nach Anspruch 5, **dadurch gekennzeichnet, dass** die Amplituden (11) der beiden Wellenschliffe (9,10) etwa gleich sind.

7. Fräser nach einem der vorhergehenden Ansprüche, **dadurch gekennzeichnet, dass** die Perioden des ersten und des zweiten Wellenschliffs (9, 10) nicht gleich sind.

## Claims

1. A milling device (1) for machining workpieces, comprising a cylindrical tool shank (2) having an upper clamping end for clamping the milling device into a milling machine and an adjoining milling area (3),
wherein the milling area (3) comprises at least one approximately ribbon-shaped milling surface (4) which is located in the circumference of the tool shank (2) and extending in a screw thread at a pitch angle inclined in relation to the central longitudinal axis of the milling device and, at its edge (6), is limited by a cutting edge;
wherein an approximately C-shaped, concave, free surface facing inwards in cross-section adjoins the cutting edge (6) along the screw thread as a chip discharge groove (7);
wherein each ribbon-shaped milled surface (4) in its longitudinal direction is provided with a first serration (9) of periodically alternating peaks and valleys;
wherein, adjacent to the cutting edge (6), each surface of the chip discharge groove (7) is also provided with a second serration (10) of periodically alternating peaks and valleys;
**characterized in that** the periods of the two serrations (9,10) are set such that peaks and valleys of the two serrations do not generally coincide.

2. The milling device according to claim 1, **characterized in that** the periods of the first and second serrations are approximately equal, but are locally offset from each other in the circumference of the milling device by an offset (12) such that a peak of the first serration (9) does not coincide with a peak of the second serration (10).

3. The milling device according to claim 2, **characterized in that** the offset (12) of the periods of the serrations (10, 11) is 10 to 90% of the period length.

4. The milling device according to claim 3, **characterized in that** the offset (12) is about 50% of the period length so that a peak of the first serration (9) coincides with a valley of the second serration (10).

5. The milling device according to one of the preceding claims, **characterized in that** the amplitude curve of the two serrations (9, 10) is approximately equal.

6. The milling device according to claim 5, **characterized in that** the amplitudes (11) of the two serrations (9, 10) are approximately equal.

7. The milling device according to one of the preceding claims, **characterized in that** the periods of the first and second serrations (9, 10) are not equal.

## Revendications

1. Fraise (1) destinée à l'usinage par enlèvement de copeau de pièces à usine, comprenant une tige d'outil cylindrique (2), qui présente une extrémité de serrage supérieure pour le serrage de la fraise dans une machine à fraiser et une zone de fraisage adjacente (3),
dans laquelle la zone de fraisage (3) comprend au moins une surface de fraisage (4) approximativement en forme de bande qui est située dans la périphérie de la tige (2) de l'outil, s'étendant dans un pas de vis à un angle de pas incliné par rapport à l'axe longitudinal central de la fraise et délimitée à son bord par une arête de coupe (6);
dans laquelle une surface libre en forme de C, en forme concave, tournée vers l'intérieur en section transversale, se raccorde à l'arête de coupe (6) le long du pas de vis, sous la forme d'une rainure d'évacuation des copeaux (7);
dans laquelle chaque surface fraisée en forme de bande (4), dans sa direction longitudinale, est pourvue d'une première dentelure (9) de crêtes et de creux alternant périodiquement;
dans laquelle chaque surface de la rainure d'évacuation des copeaux (7) est également pourvue d'une deuxième dentelure (10) de crêtes et de creux alternant périodiquement à proximité de l'arête de coupe (6);
**caractérisée en ce que** les périodes des deux dentelures (9, 10) sont ajustées de telle sorte que les crêtes et les creux des deux dentelures ne coïncident généralement pas.

2. Fraise selon la revendication 1, **caractérisée en ce que** les périodes de la première et de la deuxième dentelure sont approximativement égales mais sont localement décalées l'une par rapport à l'autre par un décalage (12) dans la périphérie de la fraise de sorte qu'une crête de la première dentelure (9) ne coïncide pas avec une crête de la deuxième dentelure (10).

3. Fraise selon la revendication 2, **caractérisée en ce que** le décalage (12) des périodes des dentelures (10, 11) est de 10 à 90% de la longueur de la période.

4. Fraise selon la revendication 3, **caractérisée en ce que** le décalage (12) est d'environ 50 % de la longueur de la période, de sorte qu'une crête de la première dentelure (9) coïncide avec un creux de la deuxième dentelure (10).

5. Fraise selon l'une des revendications précédentes, **caractérisée en ce que** la courbe d'amplitude des deux dentelures (9, 10) est approximativement égale.

6. Fraise selon la revendication 5, **caractérisée en ce que** les amplitudes (11) des deux dentelures (9, 10) sont approximativement égales.

7. Fraise selon l'une des revendications précédentes, **caractérisée en ce que** les périodes des première et deuxième dentelures (9, 10) ne sont pas égales.
